# EUROPEAN PATENT APPLICATION

(11) **EP 2 333 678 A1**
(43) Date of publication of application: **15.06.2011**
(21) Application number: 10015484.8
(22) Date of filing: 09.12.2010
(51) Int. Cl.: G06F 17/30

(54) **Systems and methods for distribution of data in a database index**

(30) Priority: 11.12.2009 US 654152
(71) Applicant: SAP AG, 69190 Walldorf (DE)
(72) Inventor: Kim, Ki Hong, 69190 Walldorf (DE); Noh, Jaeyun, 69190 Walldorf (DE); Hwang, Sang Yong, 69190 Walldorf (DE); Kook, Jin Young, 69190 Walldorf (DE)
(74) Representative: Müller-Boré & Partner Patentanwälte

(57) **Abstract**

Systems and methods consistent with the invention may include storing, in a memory device of the computer system, a node including existing data values stored in a sequence, including in the node an insert position value and an append count value, the insert position value providing a position in the node where one of the existing data values is included, and the append count value being a counter value that is modified based on the inclusion of the existing data values in the node; receiving a new data value; determining a location in the memory device for storing the new data value, wherein the location is determined based on at least one of a type of the new data value, the sequence, and the append count value; and storing the new data value in the determined location.

## Description

### Relevant Field

Systems and methods consistent with the present invention generally relate to the management of data records and/or entries. More particularly, systems and methods consistent with the invention relate to managing access to business data by managing distribution of data in a database index.

### Background Information

Businesses and other organizations generate and/or receive a variety of entries, data items, data objects, data records, and electronic information (broadly referred to hereafter as "business data") during the course of their operation. The business data may be generated and/or received from various locations in different regions and/or countries. To organize and manage operations of the organization, business data may be stored in storage devices, such as disk drives and tape drives located in a variety of locations. These storage devices may include databases of various structures that store the business data as tables of data, where the tables may consist of rows and columns and may represent relations between the stored data.

In order to facilitate access to and/or retrieval of stored business data, organizations may generate a database index that includes index values corresponding to the business data. A database index may contain key-fields of database tables that contain the business data. Conventional examples of a database index may include a B+ tree, a B- tree, and/or a B*- tree (broadly referred to hereafter as "B trees"). The B trees may include data structures storing data pointers used for efficient searches, insertions, deletions, and sequential access of business data. The B trees may include a root node, an internal node, and a leaf node.

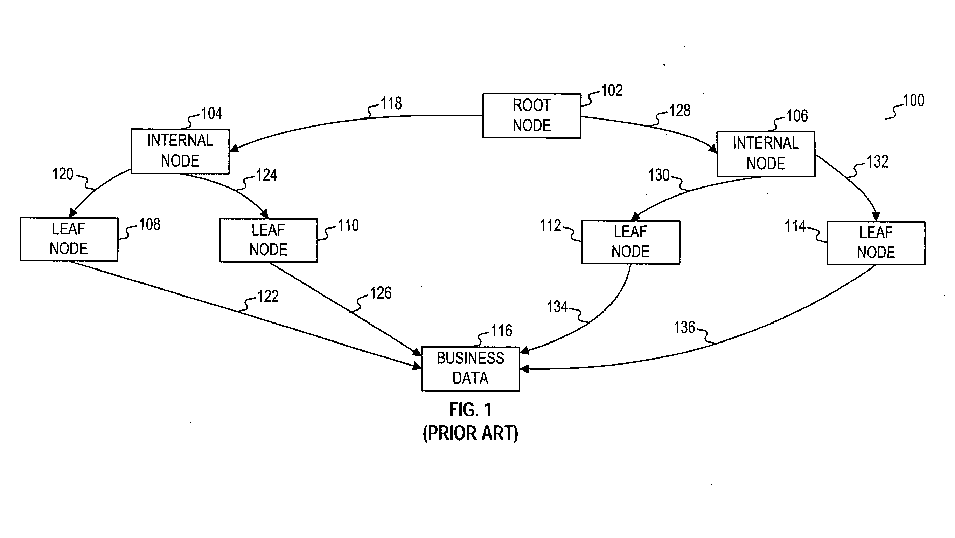

For example, Fig. 1 illustrates a conventional database index such as a B- tree 100 having a root node 102; internal nodes 104 and 106; and leaf nodes 108, 110, 112, and 114. As is illustrated in Fig. 1, root node 102 is at the top of B- tree 100 and leaf nodes 108, 110, 112, and 114 are at the bottom of B- tree 100. Nodes 102, 104, 106, 108, 110, 112, and 114 may include key values and/or pointer values used to access nodes at a lower level and/or to access business data 116. Root node 102 may include a pointer that leads to internal node 104 via a path 118. Similarly, internal node 104 may include a pointer that leads to leaf node 108 via a path 120. Leaf node 108 may include a key value corresponding to a key value of business data 116, and may also include a pointer that leads to business data 116 via a path 122. Nodes 102, 106, 110, 112, and 114 may have additional pointers and key values that may be used to access and/or retrieve business data 116 via, for example, paths 118, 124, 126, 128, 130, 132, 134, and/or 136.

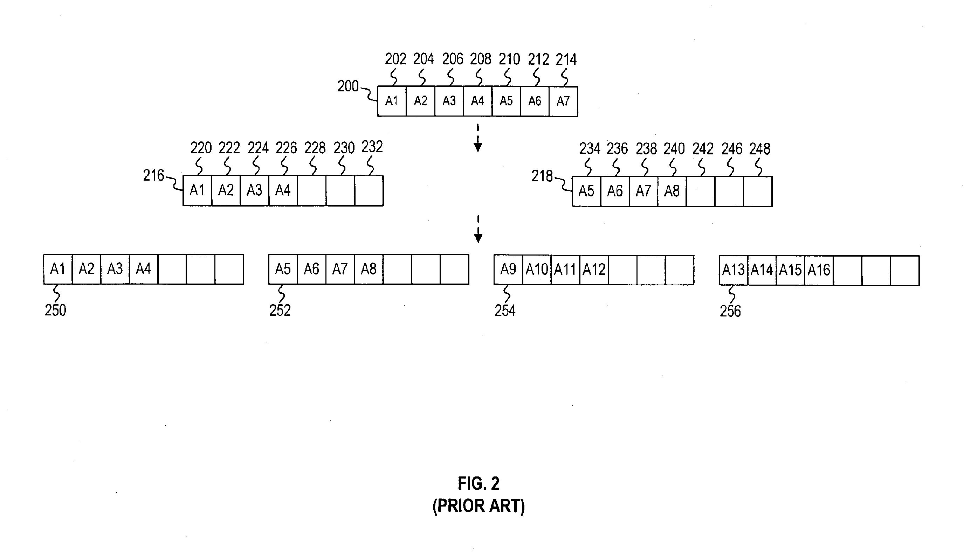

As operations of an organization continue, additional business data 116 is generated and stored. Further, corresponding key values and/or pointers are inserted into nodes of B- tree 100. When a node is full, additional key values and/or pointers cannot be added into the node. The node may then be split, or divided, into two nodes which may contain an equal number of key values and pointers. For example, Fig. 2 illustrates a conventional leaf node 138 that may correspond to leaf node 108 of Fig. 1.

Leaf node 200 may include sections 202, 204, 206, 208, 210, 212, and 214 that may respectively store key values A1, A2, A3, A4, A5, A6, and A7. Due to the storing of additional business data, a new key value A8 may need to be added to leaf node 200. As is illustrated in Fig. 2, leaf node 200 may not have additional sections to store key value A8, and may be split into nodes 216 and 218. Node 216 may include sections 220, 222, 224, 226, 228, 230, and 232, and node 218 may include sections 234, 236, 238, 240, 242, 246, and 248. Key values A1 to A8 may be equally divided between nodes 216 and 218 such that key values A1 to A4 may be stored in sections 220 to 226 of node 216, and key values A5 to A8 may be stored in sections 234 to 240 of node 218. In addition, node 216 may have empty sections 228, 230, and 232, and node 218 may have empty sections 242, 246, and 248.

The splitting of nodes and the equal division of key values may continue as additional business data and additional key values are stored. For example, after multiple divisions (not shown), node 200 may finally be split into nodes 250, 252, 254, and 256 to accommodate key values A1 to A16. As is illustrated in Fig. 2, however, each of nodes 250, 252, 254, and 256 may have three empty sections, and memory may be allocated inefficiently to store key values A1 to A16. This may lead to increased data storage costs for the organization. In addition, while using key values stored in leaf nodes 250, 252, 254, and 256 to access and/or retrieve business data, a search engine may have to traverse multiple leaf nodes having empty sections to successfully retrieve the business data, thus increasing data access delays.

In view of the foregoing, it is desirable to provide methods and systems for efficiently allocating memory while storing a database index. For example, there is a need for improved methods and systems to manage access to business data by more efficiently managing distribution of data in a database index.

### SUMMARY

Consistent with embodiments of the present invention, systems, methods and computer-readable storage media are disclosed for managing distribution of data in a database index.

Consistent with one embodiment of the invention, a method for managing distribution of data values is provided. The method includes storing, in a memory device of a computer system, a node including existing data values stored in a sequence, including in the node an insert position value and an append count value, the insert position value providing a position in the node where one of the existing data values is included, and the append count value being a counter value that is modified based on the inclusion of the existing data values in the node, receiving a new data value, determining a location in the memory device for storing the new data value, wherein the location is determined based on at least one of a type of the new data value, the sequence, and the append count value, and storing the new data value in the determined location.

Consistent with another embodiment of the present invention, there is provided a system for managing distribution of data values. The system comprises a memory device storing a node including the existing data values, wherein the existing data values are stored in a sequence; an optimization engine; and a data processor executing the optimization engine to include an insert position value and an append count value in the node, the insert position value providing a position in the node where one of the existing data values is included, and the append count value being a counter value that is modified based on the inclusion of the existing data values in the node; receive a new data value; determine a location in the memory device for storing the new data value, wherein the location is determined based on at least one of a type of the new data value, the sequence, and the append count value; and store the new data value in the determined location.

Consistent with another embodiment of the present invention, there is provided a computer-readable storage medium comprising instructions, which when executed on a processor, cause the processor to perform a method of managing distribution of existing data values. The method comprises storing, in a memory device of the computer, a node including existing data values stored in a sequence; including in the node an insert position value and an append count value, the insert position value providing a position in the node where one of the existing data values is included, and the append count value being a counter value that is modified based on the inclusion of the existing data values in the node; receiving a new data value; determining a location in the memory device for storing the new data value, wherein the location is determined based on at least one of a type of the new data value, the sequence, and the append count value; and storing the new data value in the determined location.

It is to be understood that both the foregoing general description and the following detailed description are exemplary and explanatory only, and should not be considered restrictive of the scope of the invention, as described and claimed. Further, features and/or variations may be provided in addition to those set forth herein. For example, embodiments of the invention may be directed to various combinations and sub-combinations of the features described in the detailed description.

### BRIEF DESCRIPTION OF THE DRAWINGS

The accompanying drawings, which are incorporated in and constitute a part of this disclosure, illustrate various embodiments and aspects of the present invention. In the drawings:

Fig. 1 illustrates a diagram of a conventional database index;

Fig. 2 illustrates a diagram of leaf nodes of a conventional database index;

Fig. 3 illustrates an exemplary system for managing distribution of data in a database index, consistent with the present invention;

Fig. 4 illustrates an exemplary leaf node that is split during insertion of a data value near a right end of the lead node, consistent with the invention;

Fig. 5 illustrates an exemplary leaf node that is split during insertion of a data value near a left end of the lead node, consistent with another embodiment of the invention; and

Fig. 6 illustrates a flowchart illustrating an exemplary process 600 for managing distribution of data in a database index, consistent with the present invention.

### DETAILED DESCRIPTION

The following detailed description refers to the accompanying drawings. Wherever possible, the same reference numbers are used in the drawings and the following description to refer to the same or similar parts. While several exemplary embodiments and features of the invention are described herein, modifications, adaptations and other implementations are possible, without departing from the spirit and scope of the invention. For example, substitutions, additions or modifications may be made to the components illustrated in the drawings, and the exemplary methods described herein may be modified by substituting, reordering, or adding steps to the disclosed methods. Accordingly, the following detailed description does not limit the invention. Instead, the proper scope of the invention is defined by the appended claims.

Systems and methods consistent with the invention generally relate to management of data records and/or entries. Exemplary database management engines may be used in systems consistent with the invention, including those offered by SAP AG, such SAP MaxDB (R). SAP MaxDB may perform database management operations that may facilitate efficient allocation of memory while storing database indexes, and further may provide techniques enabling access and retrieval of business data without delays.

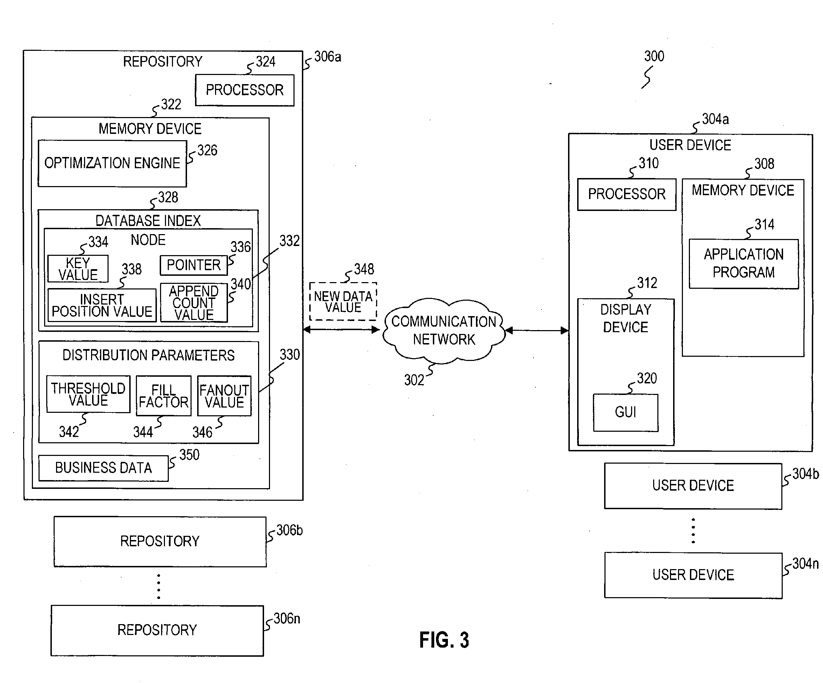

For example, Fig. 3 illustrates an exemplary system 300, which may be implemented using SAP MaxDB. System 300 may thus facilitate management of business data, generated and/or stored by an organization during the course of operations. Specifically, the components of system 300 may be adapted to more efficiently distribute data in database indexes as business data is generated and stored in system 200.

As shown in Fig. 3, system 300 may include a communication network 202 that facilitates communication between a user devices 304a-n and repositories 306a-n. Communication network 302 may include one or more network types, such as a wide-area network (WAN), a local-area network (LAN), or the Internet. Communication network 302 may operate by wireline and/or wireless techniques and may use transmission control protocol/internet protocol ("TCP/IP") or any other appropriate protocol to facilitate communication between user devices 304a-n and repositories 306a-n of system 300. Network connections between the user devices and repositories of system 300 may be established via Ethernet, telephone line, cellular channels, or other transmission media.

User devices 304a-n and/or repositories 306a-n of system 300 may comprise a combination of one or more application programs and one or more hardware components. For example, application programs may include software modules, sequences of instructions, routines, data structures, display interfaces, and other types of structures that execute operations of the present invention. Further, hardware components may include a combination of Central Processing Units (CPUs), buses, memory devices, storage units, data processors, input devices, output devices, network interface devices, and other types of components that will become apparent to those skilled in the art.

Consistent with an embodiment of the present invention, user device 304a may be an appropriate device for sending, receiving, processing, and presenting data. For example, user device 304a may be implemented using a variety of types of computing devices, such as a personal computers, workstations, mainframe computers, notebooks, global positioning devices, and/or handheld devices such as cellular phones and personal digital assistants.

As is illustrated in Fig. 3, user device 304a may be a computer system including a memory device 308, a processor 310, and a display device 312. Memory device 308 may be used to store instructions, such as an application program 314, which may be executed by processor 310 to cause user device 304a to implement a plurality of operations. Application program 314 may be used to implement various business operations of the organization operating system 300. Display device 312 may be used to implement a graphical user interface (GUI) 320 to allow a user of user device 304a to interface with at least a portion of system 300. For example, graphical user interface 320 may display data generated during execution of application program 314. User device 304a may also include additional components such as input and output devices (not shown), and user devices 304b-n may also include memory devices, processors, and application programs as described above with respect to user device 304a.

User devices 304a-n may communicate with repositories 306a-n via communication network 302. Repositories 306a-n may be used to classify, manage, and store data. Repositories 306a-n may be located in different regions and may comprise a database management system such SAP MaxDB. As shown in Fig. 3, repository 306a may include a memory device 322 and a processor 324. Memory device 322 may store instructions corresponding to an optimization engine 326. Memory device 322 may also include database index 328, distribution parameters 330, and business data 350. Business data 350 may include data records, data objects, and other electronic information that may be generated and/or received during operations of an organization, and may be arranged in database tables.

Database index 328 may include a node 332 storing data that may be used to search for, access, and/or retrieve specific information stored in business data 350. For example, node 332 may include a key value 334 and a pointer 336 that may provide a direct path of access to a specific data record stored as business data 350. Key value 334 may include index values (not shown) that may be arranged in a sequence of consecutive numbers to facilitate efficient access of business data 350 that may be stored in consecutive pages (not shown) in memory device 322. Index values may be referred to as existing data values because they may be currently stored in node 332.

Node 332 may also include an insert position value (NLastlns) 338 and an append count (NAppend) value 340. Insert position value 336 may indicate the position of a key value that was most recently inserted in node 332, and append count value 340 may indicate a number of consecutive data values inserted in node 332. The append count value 340 may be a counter that may be incremented or reset to zero as new key values are inserted into node 332. Insert position value 338 and append count value 340 may be stored in a header (not shown) of node 332.

Distribution parameters 330 may include a threshold value 342, a fill factor 344, and a fanout value 346. Threshold value 342 may be a predetermined value and may be an arbitrary number provided by a user of system 300. Threshold value 342 may be used to determine a sequence in which a new key value may be inserted in node 332, and whether the new key value is a sequential value or a random value. Fill factor 344 may be a predetermined value selected or provided by a user of system 300 to ensure that a certain amount of storage capacity of node 332 is used to store key values before node 332 may be divided or split to store new key values. For example, a fill factor of 0.9 may ensure that a new node may only be created to store additional key values when ninety percent of the storage capacity of node 332 may be used to store key value 334 and the additional key values. Fill factor 344 may apply to initial bulk loading of an index. For example, when an index is being generated for an existing data set, key values or key-record ID pairs corresponding to the data set may be collected and sorted for storing in fixed-size leaf nodes. If a fill factor of 1 or 100% is set then the each leaf node is filled until 100% of its storage capacity is used, thus resulting in each filled leaf node to be split into two nodes each including half of the sorted key-record ID pairs. Thus, it may not be beneficial to always set fill factor 344 to 100% when performing bulk loading of leaf nodes, and the fill factor 344 may be variably set based on the insertions in a particular node.

Fanout value 346 may indicate a maximum storage capacity and/or a number of key values that may be stored in node 332. As is described in further detail below, optimization engine 326 may be executed on processor 324 and may use distribution parameters 330 to arrange, distribute, and/or organize data in database index 328 in an efficient manner. Although distribution parameters 330 are indicated to be stored in memory device 322, one skilled in the art will appreciate that optimization engine 326 may automatically generate and/or provide threshold value 342, fill factor 344, and/or fanout value 346. Further, optimization engine 326 may automatically vary distribution parameters 330 when the distribution parameters provided by a user do not produce an efficient distribution of data in database index 328.

Memory device 322 may also include additional application programs (not shown) that may be executed on processor 324 for management, maintenance, and retrieval of business data 350. Repositories 306b-n may also include memory devices, application programs, and processors. Communication between user devices 304a-n and repositories 306a-n may include sending data, such as requests and queries to repository 306a, and receiving data, such as extracted business data 350 from repository 306a.

Although the exemplary embodiment of system 300 is described as having particular components arranged in a particular manner, one skilled in the art will appreciate that system 300 may include additional or fewer components that may be arranged differently. For example, system 300 may be implemented with only a single user device 304a including optimization engine 326, database index 328, predetermined threshold value 330, and business data 350. System 300 may also be implemented with only a single user device 304a and a single repository 306a. Further, user devices 304a-n and repositories 306a-n may include additional processors and/or memory devices. System 300 may also be implemented in a client/server arrangement, and the server may include hardware and software components. Memory devices 308 and 322 may include a variety of types of computer-readable storage media, such as non-volatile or volatile memories, including, by way of example, semiconductor memory devices, such as EPROM, RAM, ROM, DRAM, EEPROM, and flash memory devices; magnetic disks such as internal hard disks and removable disks; magneto-optical disks; and CD-ROM disks.

During execution of business operations, application program 314 may be executed on processor 310 to generate electronic information. The electronic information may then be sent to repository 306a via communication network 302 for management and storing. The electronic information may be stored in memory device 322 as business data 350, and optimization engine 326 may be executed on processor 324 to update database index 328 based on the received electronic information. As is described in further detail below, updating database index 328 may include receiving, generating, or storing a new data value 348 in node 332 and/or generating a new node by splitting node 332 into two nodes and dividing key value 334 and new data value 348 between the two nodes. The new data value 348 may be a key value and may be associated with key value 334 in node 332.

For example, upon receiving or generating new data value 348 for insertion, optimization engine 326 may determine a position or location where the new data value may be inserted in database index 328. The location may be determined based on a type of the data value that is being inserted and a sequence in which a previous key value 334 may be stored in node 332. For example, the key value 334 may include customer names in one column of a database table and order IDs, associated with the customer names, in a second column of the database table. The customer names may be sorted in an alphabetic order. When new data value 348 representing a new customer name is received for insertion into node 332 optimization engine 326 may determine a location for insertion of new data value 348 based on the alphabetic order according to which the previous customer names are sorted. In such a case, new data value 348 may be inserted randomly within a row of the database table that may correspond to the alphabetic sequence. For example, a customer name "Brian" may be inserted in row between customer names "Bob" and "Diana."

Similarly, the database table may be sorted based on the order IDs such that the first order received is assigned an order ID of "1" and subsequent IDs may be assigned numbers in an incremental order. When a data value representing a new order ID is received for insertion into node 332 optimization engine 326 may determine a location for insertion of the data value based on the previously inserted order ID which may be a number less than the received order ID. In such a case, append insertion may be performed and new data value 348 may be inserted in a row of the database table that may correspond to the numerical sequence. For example, an order ID "6" may be inserted in a row right below previous order ID "5."

Upon receipt of new data value 348 optimization engine 326 may determine that node 332 includes sufficient space to insert new data value 348 with key value 334, and may determine that new data value 348 is a value that may need to be inserted adjacent to an index value in key value 334 to maintain a sequence of index values. In such an event, optimization engine 326 may insert new data value 348 in node 332 and adjacent to the index value. Further, optimization engine 326 may increment append count value 340 and update insert position value 338 based on the inserted new data value.

When optimization engine 326 determines that new data value 348 may not need to be inserted adjacent to key value 334, new data value 348 may be inserted in node 332, and optimization engine 326 may reset append count value 340 to zero and may update insert position value 338 based on the inserted new data value.

In contrast, optimization engine 326 may determine that node 332 does not include sufficient space to insert new data value 348 with key value 334, and that adding new data value 348 in node 332 may result in node overflow. In such an event, optimization engine may first determine whether the insertion of the new data value 348 should be an appended insertion or a random insertion.

Optimization engine 326 may determine that new data value 348 should be inserted in sequence to key value 334 by performing a comparison between append count value 340 and threshold value 342. In the event that append count value 340 may be determined to be less than threshold value 342, optimization engine 326 may split or divide node 332 into two nodes (not shown) and may perform random insertion of new data value 348 into database index 328 by distributing key value 334 and new data value 348 based on a random distribution technique. The random distribution technique may include inserting key values in between current rows of a database table depending on a type of the key value and the order in which the previously stored key values were sorted. After distribution, optimization engine 326 may update insert position value 338 and append count value 340 depending on which node new data value 348 was inserted in. For example; updated insert position value 338 and updated append count value 340 may be included in a header of the node in which new data value 348 was inserted and/or they may be included in headers of both the split nodes.

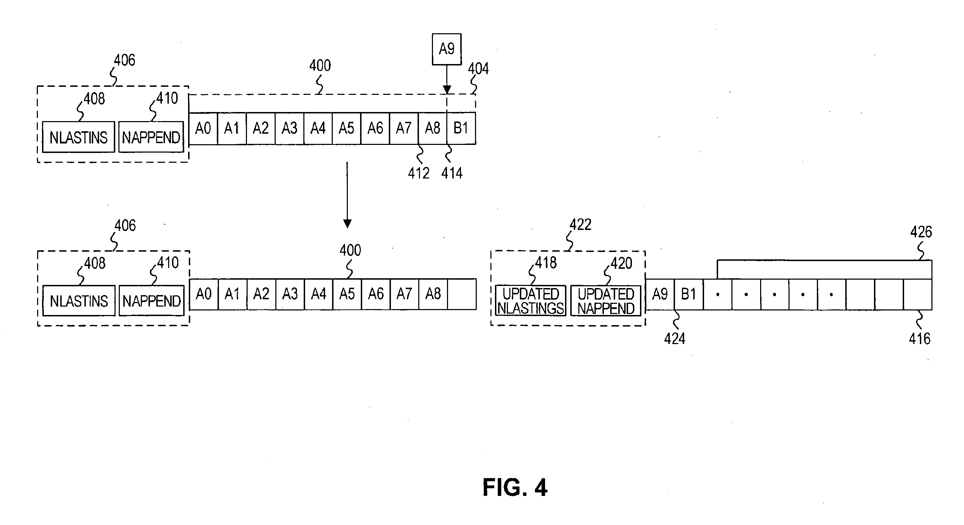

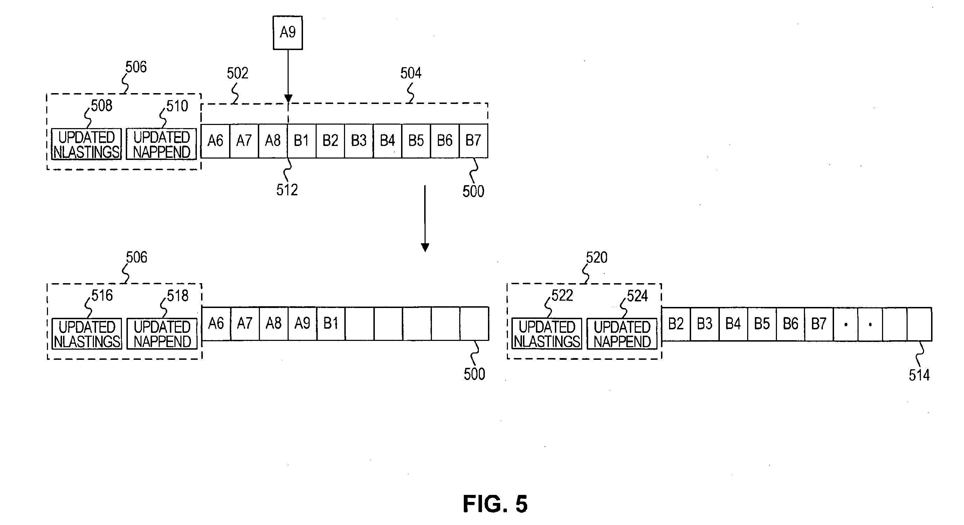

As is described in further detail below with respect to Figs. 4 and 5, in the event that append count value 340 may be determined to be greater than or equal to threshold value 342, optimization engine 326 may split or divide node 332 into two nodes and may perform appended insertion of new data value 348 into database index 328 by distributing key value 334 and new data value 348 based on an appended distribution technique. The appended distribution technique may include determining whether new data value may need to be inserted in the beginning or end of a sequence of index values stored in database index 332 as key value 334. For example, key values may be inserted in a new row of a database table underneath a previously inserted key value belonging to a sequence and the insertion may depend on a type of the key value and the order in which the previously stored key values were sorted.

Optimization engine 326 may then distribute key value 334 and new data value 348 based on this determination and by using fill factor 344 and fanout value 346. For example, when optimization engine 326 determines that insert position value 338 is greater than or equal to the product of fill factor 344 and fanout value 346, the new data value 348 may be determined to be inserted in a location close to a right end of node 332. Based on this determination, optimization engine 326 may retain index values, stored as key values 334 in node 336, on the left of the determined location, and may insert new data value 348 and one or more index values, on the right of the determined location, into the newly generated split node.

The ratio of index values retained in node 332 to index values and new data value 348 distributed into the newly generated split node may be determined based on fill factor 344, which may be selected by a user that interfaces with system 300 via user device 304a. Alternatively, optimization engine 326 may select a fill factor based on a default value. For example, ninety percent of index values may be retained in node 332 and ten percent of index values may be sent to newly generated split node when a fill factor of 0.9 is used during appended distribution. Further, when optimization engine 326 determines that insert position value 338 is greater than or equal to the product of fill factor 344 and fanout value 346, and upon completion of the distribution, insert position value 338 and append count value 340 may be updated. The updated values may be included in a header of the newly generated split node such that future new data values may be inserted into the newly generated split node storing ten percent of index values.

When optimization engine 326 determines that insert position value 338 is less than the product of fill factor 344 and fanout value 346, the new data value 348 may be determined to be inserted in node 332. Further, most of the index values falling on the right of inserted new data value 348, that may be stored in a sequence of index values as key value 334, may be distributed into the newly generated split node. Based on this determination, optimization engine 326 may keep most of index values stored as key value 334 in node 332, and may insert new data value 348 and a few index values into the newly generated split node. When optimization engine 326 determines that insert position value 338 is less than the product of fill factor 344 and fanout value 346 and upon completion of the distribution, insert position value 338 and append count value 340 may be updated. The updated values may be included in a header of node 332 in which new data value 348 was inserted such that future insertions may be inserted into the space created in node 332 due to the distribution of index values into newly generated split node.

As business operations are executed, optimization engine 326 may receive additional electronic information from user devices 304a-n and may continuously update database index 328 and store the electronic information as business data 350 by repeating the above-mentioned operations. Further, the results of distribution of index values stored as key value 334 may be checked by optimization engine 326 and if the results do not satisfy a business requirement, optimization engine 326 may vary distribution parameters 330, including threshold value 342 and fill factor 344, and may redistribute the index values based on the varied distribution parameters to satisfy the business requirement.

Results of distribution may also be sent to user device 304a, via communication network 302, and may be displayed on GUI 320 for a user of business organization. The user may then decide to vary distribution parameters and may send a request to repository 306a to execute optimization engine 326 on processor 324 to perform a redistribution. Further, user device 304a may send a search request to repository 306a for a data item stored in business data 350 and processor 324 may be able to efficiently access and/or retrieve the requested data item by searching for a key value in split nodes included in database index 328. The key value may provide a direct path and/or location of the requested data item stored as business data 350 in memory device 322. The requested data item may then be sent to user device 304a via communication network 302, thus minimizing search delays caused due to efficient allocation of storage capacity of memory device 322 for storing of database index 328.

Referring now to Fig. 4, it illustrates an exemplary leaf node 400 that includes index values A0, A1, A2, A3, A4, A5, A6, A7, A8, and B1. Index values A0 to A8 and B1 may also be referred to as existing data values because they may be currently stored in leaf node 400. Leaf node 400 may correspond to, for example, node 332 stored in memory device 322 of system 300. Index values A0 to A8 and B1 may correspond to, for example, key value 334 stored in memory device 322 of system 300. Index values A0 to A8 may be consecutive index values of a sequence and may be included in a partition 402, and index value B1 may be included in partition 404. Leaf node 400 may include a header 406 that may include a value nLastlns 408 and nAppend 410.

NLastlns 408 may correspond to insert position value 338 stored in database index 328 of system 300, and may indicate a position in leaf node 400 where the most recent insertion of an index value occurred. NApppend 410 may correspond to append count value 340 stored in database index 328 of system 300, and may be a counter value that may be incremented or reset to zero each time a new index value is inserted. For example, assuming that B1 is inserted before A1 in leaf node 400 and A8 has not been inserted in leaf node 400, nLastlns 408 may be updated to indicate a position 412 of node 400 when A7 is inserted, as it is the position where the most recent index value was inserted. NAppend 410 may be incremented to seven because nAppend 410 may have been continuously updated from zero to seven, as index values A1 to A7 were being inserted in leaf node 400.

Leaf node 400 may not have sufficient space to insert an index value A9. Index value A9 may be a consecutive entry of a sequence and may be determined to be inserted in a location 414 of leaf node 400. To maintain a sequence of index values A0 to A9, location 414 may be determined to be before partition 404 and after index value A8. Thus, index value A9 may be determined to be inserted into a location close to a right end of leaf node 400. Since leaf node 400 may not have sufficient space to insert index value A9, a new split node 416 may be generated. Index values A0 to A9 and B1 may then be distributed between leaf node 400 and newly generated split node 416 based on a selected fill factor.

As is illustrated in Fig. 4, a fill factor of 0.9 may ensure that ninety percent of storage capacity of node 400 may be used such that index values A0 to A8 may be retained in node 400 and the remaining values may be inserted in newly generated split node 416. New index value A9 and index value B1 may be inserted in newly generated split node 416. Values nLastlns 408 and nAppend 410 may be updated based on the insertion and an updated nLastlns 418 and an updated nAppend 420 may be stored in a header 422 of newly generated split node 416. Updated nLastlns 418 may indicate a position 424 on leaf node 416 and updated nAppend 420 may indicate an updated append count value of eight because A9 was inserted in newly generated split node 416. Storing updated nLastlns 418 and updated nAppend 420 in header 422 may ensure that additional index values may be stored in empty sections 426 of newly generated split node 416. When node 400 is split into two nodes, newly generated split node inherits the values from header 406 due to insertion of new index value A9 in newly generated split node 416, and nLastlns 408 may be reset to null and nAppend 410 may be reset to zero.

Fig. 5 illustrates an exemplary leaf node 500 that includes index values A6, A7, A8, B1, B2, B3, B4, B5, B6, and B7. Index values A6 to A8 may be consecutive index values of a sequence and may be included in a partition 502, and index values B1 to B7 may also be consecutive index values of a sequence included in partition 504. Index values A6 to A8 and B1 to B7 may also be referred to as existing data values because they may be currently stored in leaf node 500. Leaf node 500 may include a header 506 that may include a value nLastlns 508 and nAppend 510. Leaf node 500 may not have sufficient space to insert an index value A9. Index value A9 may be a consecutive entry of a sequence and may be determined to be inserted in location 512 of leaf node 500. Location 512 may be close to a left end of leaf node 500. Since leaf node 500 may not have sufficient space to insert index value A9, a new split node 514 may be generated. Index values A6, A7, A8, A9, and B1 may then be inserted in leaf node 500, and index values B2 to B7 may be inserted in newly generated split node 514.

The distribution of index values A6 to A9 and B1 to B7 includes the separations of partitions 502 and 504 into leaf node 500 and 514 and updated nLastlns 516 and updated nAppend 518 may be stored in header 506 of leaf node 500. The separation of partitions 502 and 504, and the storing of updated nLastlns 516 and updated nAppend 518 in leaf node 500 may ensure that additional index values may be stored in leaf node 500 in which A9 was inserted. Newly generated split node 514 may also include a header 520 for storing an updated nLastlns 522 and an updated nAppend 524 corresponding to the index values B2 to B7 stored in newly generated split node 514. Distribution of index values B2 to B7 to newly generated split node 514 may ensure that there is storage capacity to store additional index values in leaf node 500. For example, a new index value A91 (not shown) may be received and may be stored in leaf node A9 next to previously stored index value A9. Further, additional values A92, A93, A94, A95, and A96 may be stored in leaf node 500 and index value B1 may be distributed to newly generated split node 514.

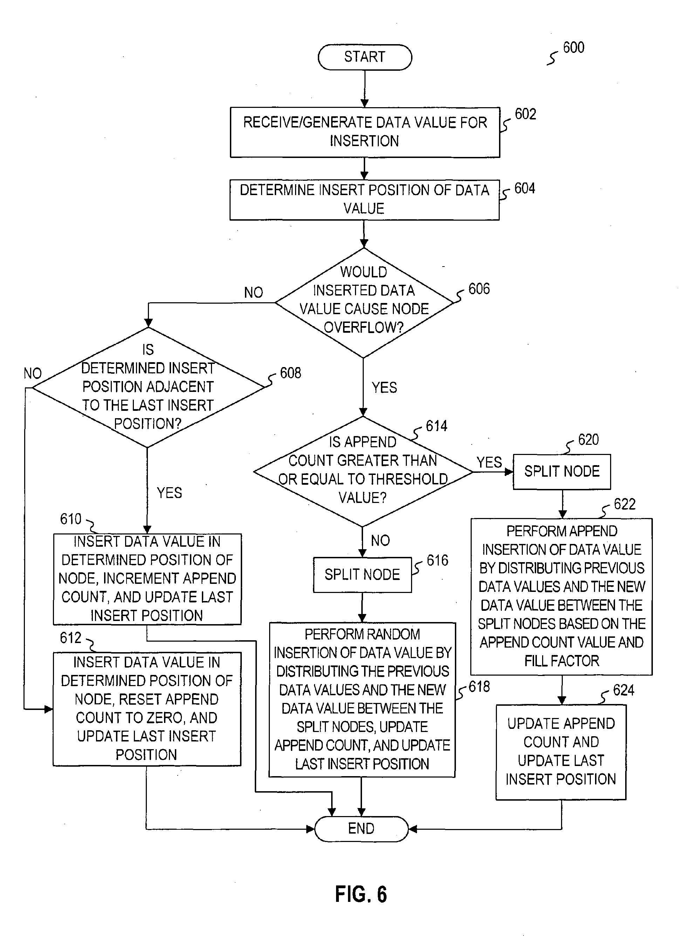

Fig. 6 illustrates an exemplary process 600 for managing distribution of data stored in a database index, consistent with the present invention. The process may be executed by, for example, execution of optimization engine 326 on processor 324 of system 300. The process may begin in step 602, where a new data value may be received and/or generated that may need to be inserted in a node of a database index of an organization. The new data value may be an index value and/or a key value corresponding to a data item stored as business data of an organization. Next, in step 604, an insert position of the new data value may be determined. The insert position may be determined based on a type of the new data value and the sequence in which the previous values are stored in the node. For example, the new data value may be a customer name and the previous values may be customer names sorted by an alphabet order. The new data value may also be an order ID and the previous values may be order IDs sorted in a numerical order that may be incremented as new orders are assigned.

In step 606, it may be determined whether inserting the new data value in the node of the database index would cause a node overflow. For example, if the node has sufficient space to insert the new data value, (step 606: No), the process may move to step 608. In step 608, it may determined whether the insert position of the new data value, determined in step 604, is adjacent to the most recently inserted data value in the node. The insert position of the new data value may be determined to be not adjacent to the most recently inserted data value (step 608: No) when the new data value may not be a consecutive value of a sequence of data values stored the node, and the process may move to step 612. In step 612, the new data value may be inserted in the node, the insert position value (nLastins) may be updated in the header of the node based on the insertion, and an append count value (nAppend) stored in the header of the node may be reset to zero.

Alternatively, the process may move to step 610 when the insert position of the new data value may be determined to be adjacent to the most recently inserted data value (step 608: Yes), and the new data value may be inserted into the node. Further, the insert position value (nLastlns) may be updated in the header of the node based on the insertion, and an append count value (nAppend) stored in the header of the node may be incremented based on the insertion.

Returning now to step 606, the process may determine that inserting the new data value may cause a node overflow (step 606: Yes) because the node does not have sufficient space to store the new data value, and the process may move to step 614. In step 614, it may be determined whether append count value stored in the header of node is greater than or equal to the threshold value. The process may move to step 616 when it may be determined that the append count value is less than the threshold value (step 614: No), and the node may be split by generating a new split node. Next, in step 618, random insertion may be performed by insertion of the new data value and distribution of the data values, previously included in the node, between the node and the newly generated split node. Further, an updated append count and an updated last insertion value may be included in headers of one or both of the split nodes.

Returning now to step 614, the process may determine that the append count value is greater than or equal to the threshold value (step 614: Yes), and the node may be split by generating a new split node (step 620). Next, in step 622, append insertion may be performed by distributing the new data value and the data values, previously included in the node, between the node and the newly generated split node based on the append count value and a fill factor of the node. The fill factor may be selected by a user and may indicate a percentage of storage capacity used by a node to store data values. For example, a fill factor of 0.9 and an indication by append count value that the new data value may be inserted near a right end of the node may result in use of ninety percent of storage capacity of the node and most of the data values may be retained in the current node. The remaining data values including the new data value may be distributed to the newly generated split node. In addition, if an append count value indicates that the new data value may be inserted near the left end of the node, the new data value may be included in the node and most of the values on the right of the new data value may be distributed to the newly generated split node.

Next, in step 624, an updated count value and an updated insert position value may be stored in either the header of the node or the header of the newly generated node, and the process may end. For example, an updated count value and an updated insert position value may be stored in the header of newly generated split node when the new data value is inserted near the right end of the node, and an updated count value and an updated insert position value may be stored in the header of the node when the new data value is inserted near the left end of the node.

The foregoing description of possible implementations consistent with the present invention does not represent a comprehensive list of all such implementations or all variations of the implementations described. The description of only some implementations should not be construed as an intent to exclude other implementations. One of ordinary skill in the art will understand how to implement the invention in the appended claims in may other ways, using equivalents and alternatives that do not depart from the scope of the following claims.

The systems and methods disclosed herein may be embodied in various forms including, for example, a data processor, such as a computer that also includes a database. Moreover, the above-noted features and other aspects and principles of the present invention may be implemented in various environments. Such environments and related applications may be specially constructed for performing the various processes and operations according to the invention or they may include a general-purpose computer or computing platform selectively activated or reconfigured by code to provide the necessary functionality. The processes disclosed herein are not inherently related to any particular computer or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the required methods and techniques.

Systems and methods consistent with the present invention also include computer-readable storage media that include program instruction or code for performing various computer-implemented operations based on the methods and processes of the invention. The media and program instructions may be those specially designed and constructed for the purposes of the invention, or they may be of the kind well known and available to those having skill in the computer software arts. Examples of program instructions include, for example, machine code, such as produced by a compiler, and files containing a high level code that can be executed by the computer using an interpreter.

## Claims

1. A computer-implemented method of managing distribution of data values, the method being executed by a computer system and comprising:
storing, in a memory device of the computer system, a node including
existing data values stored in a sequence;
including in the node an insert position value and an append count value,
the insert position value providing a position in the node where one of the existing data values is included, and the append count value being a counter value that is modified based on the inclusion of the existing data values in the node;
receiving a new data value;
determining a location in the memory device for storing the new data
value, wherein the location is determined based on at least one of a type of the new data value, the sequence, and the append count value; and
storing the new data value in the determined location.

2. The method of claim 1, wherein the insert position value and the append count value are included in a header of the node.

3. The method of claims 1 or 2, further comprising:
determining whether there is sufficient storage capacity in the node to
store the new data value, wherein the location is determined to be in the node when there is sufficient storage capacity;
incrementing the append count value when the location is determined to
be adjacent to the position where one of the existing data values is included; and
updating the insert position value, the updated insert position value
indicating the location in the node where the new data value is stored.

4. The method of claims 1 or 2, further comprising:
determining whether there is sufficient storage capacity in the node to
store the new data value, wherein the location is determined to be in the node when there is sufficient storage capacity;
resetting the append count value to zero when the location is determined
to not be adjacent to the position where one of the existing data values is included; and
updating the insert position value, the updated insert position value
indicating the location in the node where the new data value is stored.

5. The method of any one of the preceding claims, further comprising:
determining whether there is sufficient storage capacity in the node to
store the new data value;
generating a split node when it is determined that the new data value
cannot be stored in the node;
comparing the append count value with a threshold value, wherein the
location in the memory device is determined based on a result of the comparison; and
distributing the existing data values and the new data value between the
node and the split node based on the result.

6. The method of claim 5, wherein the existing data values and the new data value are distributed between the node and the split node when the append count value is less than the threshold value such that a number of existing data values and the new data value included in the node is substantially equal to a number of existing data values and the new data value included in the split node.

7. The method of claims 5 or 6, further comprising:
updating the append count value and the insert position value based on
the distribution; and
storing the updated append count value and the updated insert position
value in a header of the node or a header of the split node.

8. The method of any one of claims 5 to 7, further comprising:
receiving a selection of a fill factor, wherein the existing data values and
the new data value are distributed between the node and the split node based on the fill factor when the append count value is greater than or equal to the threshold value.

9. The method of any one of claims 5 to 8, wherein the existing data values and the new data value are distributed between the node and the split node based on whether the determined location is on a first side of the node or on a second side of the node, when the append count value is greater than or equal to the threshold value.

10. The method of any one of the preceding claims, wherein the node is a leaf node of one of a B- tree, B+ tree, or B-* tree.

11. The method of any one of the preceding claims, further comprising:
storing business data in the memory device; and
storing the node in a database index, wherein the existing data values and
the new data value correspond to index values used to access the stored business.

12. A computer-implemented system for managing distribution of data values, comprising:
a memory device storing a node including the existing data values,
wherein the existing data values are stored in a sequence;
an optimization engine; and
a data processor executing the optimization engine to:
include an insert position value and an append count value in the
node, the insert position value providing a position in the node where one of the existing data values is included, and the append count value being a counter value that is modified based on the inclusion of the existing data values in the node;
receive a new data value;
determine a location in the memory device for storing the new data
value, wherein the location is determined based on at least one of a type of the new data value, the sequence, and the append count value; and
store the new data value in the determined location.

13. The system of claim 12, wherein the data processor executes the optimization engine to carry out the method according to any one of the preceding claims 1 to 11.

14. The system of claim 12 or 13, wherein the existing data values and the new data value are distributed between the node and the split node based on whether the determined location is on a right side of the node or the left side of the node, when the append count value is greater than or equal to the threshold value.

15. A computer-readable storage medium comprising instructions, which when executed on a processor, cause the processor to perform a method of managing distribution of existing data values according to anyone of the preceding claims 1 to 11.
